# EUROPEAN PATENT SPECIFICATION

(11) **EP 3 199 802 B1**
(45) Date of publication and mention of the grant of the patent: **30.12.2020**
(21) Application number: 16192322.2
(22) Date of filing: 16.07.2010
(51) Int. Cl.: F03D 1/06

(54) **WIND TURBINE BLADE WITH NARROW SHOULDER AND RELATIVELY THICK AIRFOIL PROFILES**
WINDTURBINENSCHAUFEL MIT SCHMALER SCHULTER UND RELATIV DICKEN FLÜGELPROFILEN
PALE D'ÉOLIENNE À ÉPAULEMENT ÉTROIT ET À PROFILS AÉRODYNAMIQUES RELATIVEMENT ÉPAIS

(43) Date of publication of application: 02.08.2017
(62) Document number(s) of the earlier application(s) in accordance with Art. 76 EPC: 10732719.9 / 2 593 670
(73) Proprietor: LM Wind Power A/S, 6000 Kolding (DK)
(72) Inventor: Fuglsang, Peter, 7100 Vejle (DK); Andersen, Christian, Frank, 6000 Kolding (DK); Madsen, Jesper, 6621 Gesten (DK)
(74) Representative: COPA Copenhagen Patents

(56) References cited:
- EP-A1- 1 152 148
- DE-A1-102006 053 712
- DE-A1-102009 025 927
- US-A- 5 474 425
- US-A1- 2008 317 600
- HABALI S M ET AL: "Design and testing of small mixed airfoil wind turbine blades", RENEWABLE ENERGY, PERGAMON PRESS, OXFORD, GB, vol. 6, no. 2, 1 March 1995 (1995-03-01), pages 161-169, XP004049072, ISSN: 0960-1481, DOI: DOI:10.1016/0960-1481(94)00065-E
- General Electric compagny: "Mod-5A Wind turbine Generator Program Design Report", DOE/NASA/0153-3; NASA CR-174736; 84aepd004 Vol III - Final Design and System Description, Book 1, August 1984 (1984-08), XP002632712, Retrieved from the Internet: URL:http://ntrs.nasa.gov/archive/nasa/casi .ntrs.nasa.gov/19860006254_1986006254.pdf [retrieved on 2011-04-12]
- HAU ERICH ED - HAU E: "Windkraftanlagen, Ausgefuehrte Rotorblattformen", 1 January 1996 (1996-01-01), WINDKRAFTANLAGEN. GRUNDLAGEN, TECHNIK, EINSATZ, WIRTSCHAFTLICHKEIT, BERLIN : SPRINGER, DE, PAGE(S) 113 - 118, XP002174275, ISBN: 978-3-540-57430-9 * pages 113-118 *
- FUGLSANG P ET AL: "DEVELOPMENT OF THE RISO WIND TURBINE AIRFOILS", WIND ENERGY, WILEY, CHICHESTER, GB, vol. 7, no. 2, 1 January 2004 (2004-01-01) , pages 145-162, XP008068651, ISSN: 1099-1824, DOI: DOI:10.1002/WE.117
- K. K. Jin Et Al.: "Life Prediction of Wind Turbine Blades", International Conference on Composite Materials (ICCM), vol. 17, 1 July 2009 (2009-07-01), pages 1-12, XP055435697,
- Paul S. Veers ET AL: "Trends in the Design, Manufacture and Evaluation of Wind Turbine Blades", Wind Energy, vol. 6, no. 3, 1 January 2003 (2003-01-01) , pages 245-259, XP055622661, GB ISSN: 1095-4244, DOI: 10.1002/we.90
- D.M. Somers: "The S816, S817, and S818 Airfoils", NREL National Renewable Energy Laboratory, 1 October 1991 (1991-10-01), pages 1-48, XP055437371, Retrieved from the Internet: URL:https://wind.nrel.gov/airfoils/Documen ts/S816,S817,S818_Design.pdf [retrieved on 2017-12-21]

## Description

The present invention relates to a blade for a rotor of a wind turbine having a substantially horizontal rotor shaft, said rotor comprising a hub, from which the blade extends substantially in a radial direction when mounted to the hub, the blade having a longitudinal direction with a tip end and a root end and a transverse direction, the blade further comprising: a profiled contour including a pressure side and a suction side, as well as a leading edge and a trailing edge with a chord having a chord length extending there between, the profiled contour, when being impacted by an incident airflow, generating a lift, wherein the profiled contour is divided into: a root region having a substantially circular or elliptical profile closest to the hub, an airfoil region having a lift-generating profile furthest away from the hub, and a transition region between the root region and the airfoil region, the transition region having a profile gradually changing in the radial direction from the circular or elliptical profile of the root region to the lift-generating profile of the airfoil region, and a shoulder having a shoulder width and being located at the boundary between the transition region and the airfoil region, wherein the blade has a blade length, and the profiled contour comprises a local relative thickness defined as the local ratio between a maximum profile thickness and the chord length.

Wind turbine manufacturers are constantly making efforts to improve the efficiency of their wind turbines in order to maximise the annual energy production. Further, the wind turbine manufacturers are interested in prolonging the lifetime of their wind turbine models, since it takes a long time and a lot of resources to develop a new wind turbine model. An obvious way to improve the efficiency of the wind turbine is to improve the efficiency of the wind turbine blades, so that the wind turbine can generate a higher power output at a given wind speed. However, one cannot arbitrarily replace the blades of a wind turbine model with other, more efficient blades. The wind turbine models are dimensioned to specific loading ranges from the rotor and the blades. Thus, it must be ensured that the new wind turbine blades comply with the design specifications of the wind turbine model, and further it must be ensured that the wind turbine blade itself complies with warranty issues and is built to last for at least a number of years without breaking down.

Examples of blades with relatively thick airfoil profiles are given for instance in the article: "Life Prediction of Wind Turbine Blades" by K. K. Jin et al, International Conference on Composite Materials (ICCM), vol. 17, 1 July 2009, pages 1-12 and document EP1152148.

It is an object of the invention to obtain a new wind turbine blade, which is designed to comply with such previous design specifications or which provides a useful alternative to existing blades.

According to a first aspect of the invention, the object is obtained by a wind turbine blade according to claim 1 wherein the ratio between the shoulder width and the blade length is less than or equal to 0.075, and the relative thickness in a blade length interval of 0-0.8L is at least 22%.

Thus, it is seen that the invention provides a slender and relatively thick wind turbine blade. Thereby, it is possible to minimise loading of the blade, since the total area of the blade is minimised, thus lowering for instance storm loads. Further, the relatively thick blade is stiffer, due to the load carrying structure being further spaced apart, which in turn means that the blade shell can be made thinner. The overall mass may thus be kept down. However, the combination of using a narrow shoulder width and a relatively thick blade profile has surprisingly been found to increase the annual energy production (AEP) of such a blade significantly, in particular since the blade can be made longer than existing blades imposing approximately the same loading on the wind turbine provided with such blades. However, if one were to use one of these two measures alone to reduce loading, the AEP would have been decreased.

Shoulder is here defined as the position at which the wind turbine blade has its largest chord length. The length interval is defined from the root end to the tip end, the root end thus being positioned at *r*=0 and the tip end being positioned at *r*=*L.*

Preferably, the blade is prebent or prestressed. In such an embodiment, the blade is curved towards the pressure side of the blade, i.e. being curved so that the blade when installed on an upwind wind turbine curves away from a tower of the wind turbine, at least at relatively low wind speeds. In operation at for instance the design wind speed, the blades are straightened due to the force of the incoming wind and the pressure distribution on the pressure side (or correspondingly the upwind or windward side) of the blade and the suction side (or correspondingly the downwind or leeward side) of the blade, respectively, thus maximising the area swept by the blade in a rotor plane. A prebent blade makes it possible to lower the stiffness of the blade even further, thereby reducing the material needed and consequently also the loading of the blade.

All in all, it is seen that a narrow shoulder or slender blade with a relatively high thickness and provided with a prebend combined provide a blade with lower loading than prior art blades.

In one embodiment, the ratio between the shoulder width and the blade length is less than or equal to 0.073, and advantageously less than or equal to 0.0725 and more advantageously less than or equal to 0.072. These embodiments all provide blades, which are relatively slender, i.e. having a small maximum chord length.

In another embodiment, the relative thickness in a blade length interval of 0-0.8L is at least 23%, advantageously at least 23.5%, and more advantageously at least 24%. Such profiles have a relative blade thickness which is significantly larger than conventional blades, in particular in the region from 0.65L-0.8L.

In yet another advantageous embodiment, the relative blade thickness in the blade interval of 0-0.8L is at least 25%, or at least 26%.

Advantageously, the blade length is at least 40 meters, more advantageously between 40 meters and 50 meters. The slenderness and thickness proposed have been found to be particularly suited for these blade lengths.

In an advantageous embodiment, the root region has a root diameter at the root end of the blade, wherein the ratio between the shoulder width and the root diameter is 1.6 or less. By having a low shoulder width to root diameter radius it is possible to have a small divergence of the trailing edge and leading edge of the blade in the transition region, which in turn means that the curvature of the trailing edge and the leading edge, respectively, may be kept low. Thus, according to a particularly advantageous embodiment, the trailing edge has a smooth shape without any discontinuities in the longitudinal direction of the blade. This particular applies to the transition region of the blade and including the transitions from the root region to the transition region and from the transition region to the airfoil region of the blade. From a manufacturing point of view, such an embodiment is attractive, since it makes it easier to carry out the fibre layer layup in the moulds for manufacturing. Furthermore, the loadings which affect the trailing edge during normal operation of such a blade are significantly reduced.

In another advantageous embodiment, the trailing edge has a curvature with an outer radius external to the trailing edge, which at all positions is at least 0.2L, advantageously at least 0.22L, and more advantageously at least 0.24L. According to one embodiment, the position of the minimum outer radius is located between 0.04L and 0.06L, advantageously between 0.045L and 0.055L.

In yet another advantageous embodiment, the trailing edge has a curvature with an inner radius (Ri) internal to the trailing edge, which at all positions is at least 0.2L, advantageously at least 0.225L, and more advantageously at least 0.25L. According to one embodiment, the position of the minimum outer radius is located between 0.16L and 0.20L, advantageously between 0.19L and 0.21L.

A large trailing edge radius (inner and/or outer) ensures a low trailing edge curvature, which from a manufacturing point of view means that the fibre layup may be carried out without the fibre layers wrinkling. This in turn ensures that the finished blade shell after injection of resin and curing does not comprise detrimental mechanical properties.

Due to the twist and the three-dimensional design of the blade, it may be difficult to determine the exact location of the trailing edge. Therefore, the inner and outer radius may in one embodiment be deduced by projecting the blade into a plane, when observing the blade from above at 0 degree pitch.

In one embodiment, the shoulder is located in an interval between 0.18L and 0.25L, advantageously between 0.19L and 0.24L. In one advantageous embodiment, a wind turbine blade having a length in the interval of 40-45 meters has the shoulder located between 0.19L and 0.21L. In another embodiment of a wind turbine blade having a length in the interval 45-50 meters, advantageously in the interval 46.5-48.5 meters, the shoulder is located between 0.22L and 0.24L.

In another embodiment, the leading edge has a smooth shape without any discontinuities in the longitudinal direction of the blade. Advantageously, the blade comprises a pitch axis, and wherein a distance between the leading edge to the pitch axis from the root end to the shoulder increases no more than 20%, advantageously no more than 15%.

As previously mentioned, the wind turbine blade is preferably prebent or curved towards the pressure side of the blade. The prebend at the tip end of the blade is in one embodiment at least 0.05L, advantageously at least 0.06L, more advantageously at least 0.65L, and even more advantageously at least 0.07L. Prebent here means that the profile centre or chord of a local profile is distanced from a pitch axis or longitudinal axis of the blade. By increasing the prebend compared to conventional blades the stiffness must be lower in order for the blade to straighten and for maximising the swept area at the design wind speed. Thus, less material is needed in the blade shell or the load bearing structure of the blade. This in turn means that the total mass of the blade may be lowered even more.

Advantageously, the blade is prebent over at least an outer 50% of the blade, advantageously over at least an outer 60% of the blade, even more advantageously over at least an outer 70%, or even at least an outer 75%. Thus, the blade is curved over a large part of the blade at the part nearest the tip.

In another embodiment, the blade is provided with a twist, and wherein the airfoil region comprises an inboard part in which a twist angle is decreasing towards the tip end of the blade and an outboard part in which the twist angle is increasing towards the tip end of the blade, said outboard part and inboard part being separated by a position of a twist inflection tangent. By decreasing the twist angle in an inboard part of the blade, a compensation for the local radial velocity of the blade is achieved. The tip noise from the blade is reduced by letting the twist of the outboard part of the blade increase towards the tip.

The twist is usually calculated from a defined point of origin. For the present blade, said origin may for instance be defined at the inflection tangent, the local twist in this position thus being defined as 0 degrees. Thus, it is clear that the twist is not to be regarded only as a local absolute twist angle, which may vary due to the set pitch angle of the blade, but that it rather should be seen as a twist variation, i.e. as the difference in twist angle between one cross-sectional profile at a first radial position of the blade, and a second cross-sectional profile at a second radial position of the blade for a given pitch setting of the blade.

In yet another embodiment, the position of the twist inflection tangent is located between 0.8L and 0.9L, advantageously between 0.82L and 0.88L, more advantageously between 0.83L and 0.87L, and even more advantageously approximately at 0.85L.

Advantageously, the twist in the outboard region is at least 4 degrees, advantageously at least 5 degrees, and more advantageously at least 5.5 degrees. Thus, the difference in twist at the point of the inflection tangent and the tip is at least 4, 5, or 5.5 degrees. The twist in the inboard part may advantageously be between 8 and 12 degrees, advantageously between 8.5 and 11.5 degrees, and more advantageously between 9 and 11 degrees. Thus, the difference in twist at the shoulder and the point of the inflection tangent is between 8 and 12 degrees.

In one embodiment, the blade is provided with a twist, which in the root region and the transition region is increasing towards the tip end of the blade. The increase in twist may for instance in the root region and transition region be between 1.5 and 2.5 degrees. Thus, the twist variation in this region is between 1.5 and 2.5 degrees.

According to a second aspect, the invention provides a number of wind turbine blade profiles, which are particularly effective and which depart from standard blade profiles, such as NACA profiles, which are typically utilised for wind turbine blades. The blade profiles are not only applicable to the wind turbine blade according to the first aspect of the invention.

Thus, the invention provides a wind turbine blade, which in a cross-section comprises at least one of the following six profiles:
- a first airfoil profile having a relative thickness of between 35% and 37% and a position of maximum thickness located between 0.24c and 0.30c from the leading edge, advantageously located between 0.25c and 0.29c and more advantageously around 0.26c and 0.28c,
- a second airfoil profile having a relative thickness of between 29% and 31% and a position of maximum thickness located between 0.28c and 0.32c from the leading edge, advantageously between 0.29c and 0.31c,
- a third airfoil profile having a relative thickness of between 26.3% and 27.7% and a position of maximum thickness located between 0.28c and 0.32c from the leading edge, advantageously between 0.29c and 0.31c,
- a fourth airfoil profile having a relative thickness of between 23.5% and 24.5%, advantageously between 23.8% and 24.2%, and a position of maximum thickness located between 0.35c and 0.39c from the leading edge, advantageously between between 0.36c and 0.38c from the leading edge,
- a fifth airfoil profile having a relative thickness of between 20.6% and 21.4% and a position of maximum thickness located between 0.35c and 0.39c from the leading edge, advantageously between 0.36c and 0.38c, and
- a sixth airfoil profile having a relative thickness of between 17.7% and 18.3% and a position of maximum thickness located between 0.37c and 0.41c from the leading edge, advantageously between 0.38c and 0.40c.

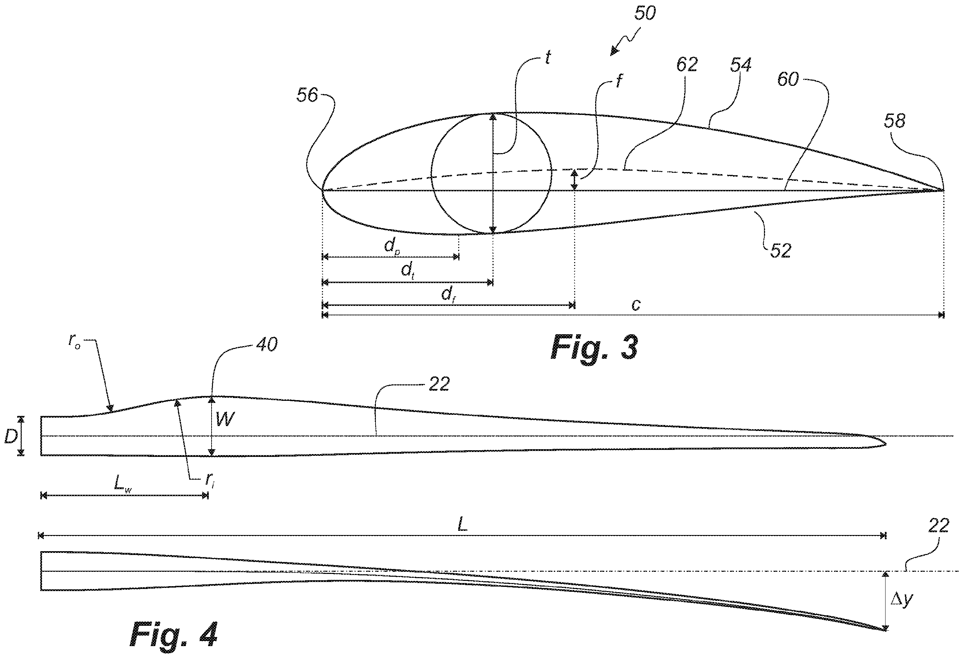

The airfoils are defined in relation to the relative thickness of the profile, the relative chordal position of the maximum thickess, and the relative chordal position of the maximum pressure side camber. The thickness is defined in a direction perpendicular to the chord, and the pressure side camber is defined as the distance between the pressure side of the blade and the chord in a direction perpendicular or normal to the chord. These parameters are also depicted in Fig. 3 and explained in the accompanying description.

Preferably, the blade comprises a root region, a transition region, and an airfoil region in accordance with the wind turbine according to the first aspect of the invention. In such an embodiment, the profiles are located in the airfoil region (outboard of the shoulder) of the blade.

In one embodiment, the blade comprises at least two of the six airfoil profiles. In another embodiment, the blade comprises at least three of the six airfoil profiles. In yet another embodiment, the blade comprises at least four of the six airfoil profiles. The blade may also comprise at least five of the six airfoil profiles, and it may even comprise all six of the airfoil profiles.

The aforementioned embodiments and the following embodiments may all relate to a wind turbine blade according to the first aspect as well as a wind turbine blade according to the second aspect.

The first airfoil profile may comprise a position of maximum pressure side camber located between 0.24c and 0.30c from the leading edge, advantageously located between 0.25c and 0.29c and more advantageously around 0.26c and 0.28c. The first airfoil profile may advantageously be located between 0.23L and 0.30L.

The second airfoil profile may comprise a position of maximum pressure side camber located between 0.28c and 0.32c from the leading edge, advantageously between 0.29c and 0.31c.The second airfoil profile may advantageously be located between 0.30L and 0.36L.

The third airfoil profile may comprise a position of maximum pressure side camber located between 0.255c and 0.295c from the leading edge, advantageously between 0.265c and 0.285c. The third airfoil profile may advantageously be located between 0.36L and 0.45L.

The fourth airfoil profile may comprise a position of maximum pressure side camber located between 0.35c and 0.39c from the leading edge, advantageously between 0.36c and 0.38c. The fourth airfoil profile may be located between 0.5L and 0.85L, advantageously along the entire interval from 0.67L to 0.8L.

The fifth airfoil profile may comprise a position of maximum pressure side camber located between 0.31c and 0.35c from the leading edge, advantageously between 0.32c and 0.34c. The fifth airfoil profile may advantageously be located between 0.85L and 0.95L.

The sixth airfoil profile may comprise a position of maximum pressure side camber located between 0.37c and 0.41c from the leading edge, advantageously between 0.38c and 0.40c.The sixth airfoil profile may advantageously be located at the tip, between 0.95L and L.

The novel airfoil profiles and in particular the fourth, fifth and sixth airfoil profiles are all relatively thick and the position of maximum thickness is positioned relatively far from the leading edge. Also, the position of maximum pressure side camber is nearly coincident with the position of maximum relative thickness. These features have surprisingly been found to have a high lift-to-drag ratio at the design point despite of the large relative thicknesses of the profiles. Furthermore, the airfoils are geometrically compatible.

According to one embodiment, a region between adjacent airfoil profiles comprises a smooth transition between said adjacent profiles via interpolation between said adjacent profiles, e.g. via Gaussian distribution curves. Thus, the region between the first airfoil profile and the second airfoil profile comprises interpolated profiles between the first airfoil profile, and correspondingly between the second and the third airfoil profile, between the third and the fourth airfoil profile, between the fourth and the fifth airfoil profile, and/or between the fifth and the sixth airfoil profile. The transitions should of course also account for the varying twist in the longitudinal direction of the blade.

The blade may advantageously be provided with flow altering devices, such as vortex generators, wherein said devices are arranged at profile sections having a relative thickness of at least 30%. In one embodiment, the blade is provided with flow altering devices, such as vortex generators, wherein said devices are arranged at profile sections having a relative thickness of maximum 70%.

In one particularly advantageous embodiment, the flow altering devices are lift augmenting devices.

Thus, the devices are arranged in a longitudinal region where the relative profile thickness is between 30% and 70%. According to another advantageous embodiment, said devices are arranged in a range between 0.1L and 0.4L, advantageously between 0.11L and 0.37L. The devices may be arranged in this region only.

In one embodiment, the relative thickness of the blade at the shoulder is between 40% and 50%, advantageously between 42% and 48%.

Preferably, the blade comprises a shell body. The shell body may for instance be assembled from a pressure side shell and a suction side shell, which are adhered or bonded to each other near the leading edge and near the trailing edge. In another embodiment, the shell is manufactured via a one-shot process, e.g. via a closed, hollow moulding method.

The shell body may comprise a longitudinally extending load carrying structure, such as a main laminate. Such a load carrying structure or main laminate is typically formed as a fibre insertion which comprises a plurality of fibre reinforcement layers, e.g. between 20 and 50 layers. On each side of the load carrying structure, the blade typically comprises a sandwich structure with a core material, such as balsa wood or foamed polymer, and with an inner and outer skin made of fibre reinforced polymer.

The blade shell is typically made of a fibre reinforced polymer material. The reinforcement fibres may for instance be glass fibres, carbon fibres, aramid fibres, metallic fibres, such as steel fibres, or plant fibres, whereas the polymer for instance may be epoxy, polyester or vinylester.

According to a third aspect, the invention provides a wind turbine comprising a number, preferably two or three, of blades according to any of the aforementioned embodiments, the blades extending substantially radially from a hub on a main shaft having a substantially horizontal centre axis, the blades together with the hub constituting a rotor with a rotor plane, and which can be put into rotation by wind.

In one embodiment, the wind turbine is pitch controlled. The wind turbine may be power regulated. According to one embodiment, a maximum power output of the wind turbine is between 1.3MW and 1.7MW, advantageously around 1.5MW. That is, the blades are particularly suited for 1.5MW class wind turbines.

The invention is explained in detail below with reference to an embodiment shown in the drawings, in which
Fig. 1 shows a wind turbine,
Fig. 2 shows a schematic view of a wind turbine blade according to the invention,
Fig. 3 shows a schematic view of an airfoil profile,
Fig. 4 shows a schematic view of the wind turbine blade according to the invention, seen from above and from the side,
Fig. 5 shows a chord length distribution of the wind turbine blade according to the invention,
Fig. 6 shows a relative thickness distribution of the wind turbine blade according to the invention,
Fig. 7 shows a twist distribution of the wind turbine blade according to the invention,
Fig. 8 shows a prebend distribution of the wind turbine blade according to the invention, and
Fig. 9 shows a power curve of a wind turbine according to the invention as a function of wind speed.

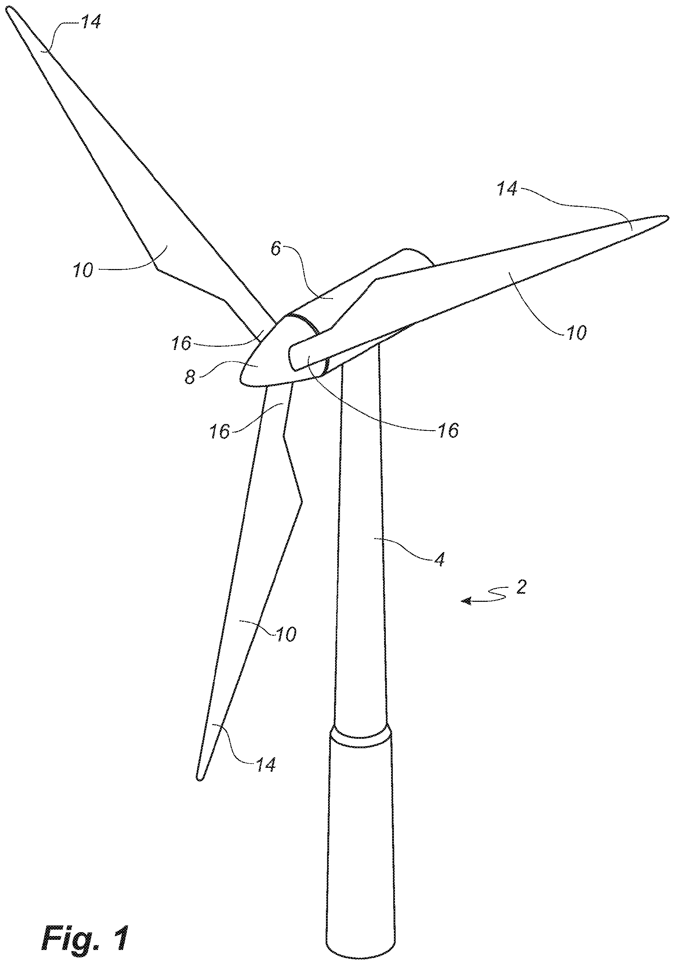

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

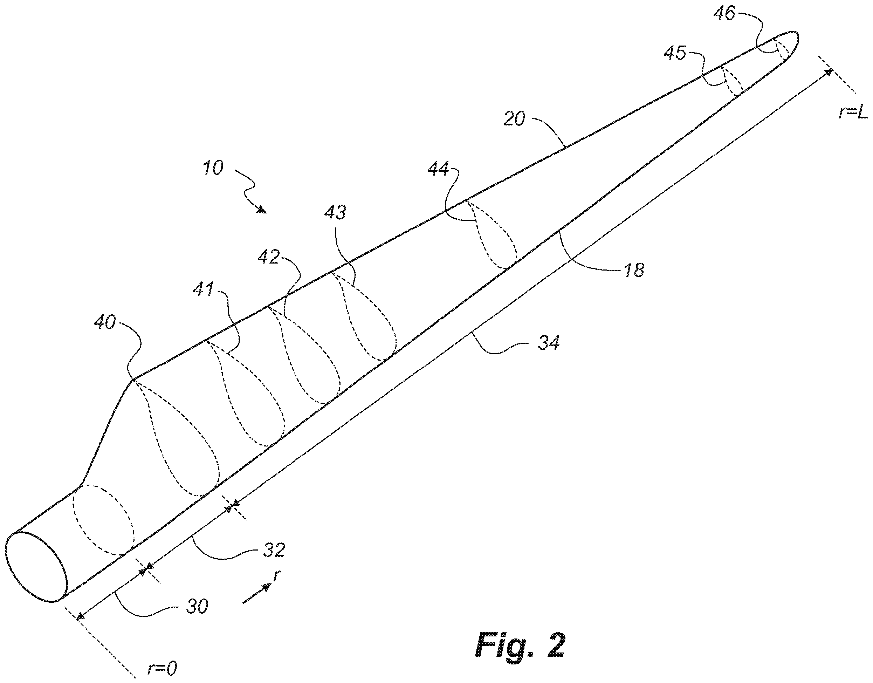

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance rfrom the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Figs. 3 and 4 depict parameters, which are used to explain the geometry of the wind turbine blade according to the invention.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length *c* extending between a leading edge 56 and a trailing edge 58 of the blade. The airfoil 50 has a thickness *t*, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f.* The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c,* the maximum camber *f,* the position *d_{f}* of the maximum camber *f,* the maximum airfoil thickness *t,* which is the largest diameter of the inscribed circles along the median camber line 62, the position *dₜ* of the maximum thickness *t,* and a nose radius (not shown). These parameters are typically defined as ratios to the chord length *c.* Thus, a local relative blade thickness *t*/*c* is given as the ratio between the local maximum thickness *t* and the local chord length *c.* Further, the position *dₚ* of the maximum pressure side camber may be used as a design parameter, and of course also the position of the maximum suction side camber.

Fig. 4 shows other geometric parameters of the blade. The blade has a total blade length *L.* As shown in Fig. 3, the root end is located at position *r* = 0, and the tip end located at *r* = *L.* The shoulder 40 of the blade is located at a position *r* = *L_{w},* and has a shoulder width *W,* which equals the chord length at the shoulder 40. The diameter of the root is defined as *D.* The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

### Example:

In the following an example of a wind turbine blade according to the invention is given.

The wind turbine blade is provided with the following parameters for length, shoulder width, minimum curvature radii for trailing edge and root cylinder diameter:

**Table 1**

| **Parameter** | **Size** |
|---|---|
| *L* | 42.13m |
| *L_{w}* | 8.5m |
| *W* | 2.975m |
| *rₒ* | 10.3m |
| *rᵢ* | 11.3m |
| *D* | 1.893m |

The distribution of chord length c, relative thickness *t*/*c*, and prebend *Δy* is listed in Table 2:

**Table 2**

| ***r*[m]** | ***c*[cm]** | ***t*/*c*[%]** | ***Δy* [cm]** |
|---|---|---|---|
| 0 | 189.3 | 100 | 0 |
| 1 | 189.3 | 100 | 0 |
| 2 | 192.5 | 98.2 | 0 |
| 4 | 223.8 | 80.2 | 0 |
| 6 | 267.8 | 60.2 | 0 |
| 8 | 295.8 | 46.6 | 0.1 |
| 10 | 292.7 | 39.2 | 1.6 |
| 12 | 277.3 | 34.4 | 5.2 |
| 14 | 256.9 | 30.8 | 10.5 |
| 16 | 233.7 | 28.1 | 17.8 |
| 18 | 210.7 | 26.2 | 26.8 |
| 20 | 190.6 | 25.0 | 37.6 |
| 22 | 173.1 | 24.3 | 50.2 |
| 24 | 157.8 | 24.1 | 64.5 |
| 26 | 144.3 | 24.1 | 80.6 |
| 28 | 132.0 | 24.0 | 98.5 |
| 30 | 120.6 | 24.0 | 118.0 |
| 32 | 109.7 | 24.0 | 139.3 |
| 34 | 99.1 | 24.0 | 162.2 |
| 36 | 89.3 | 23.4 | 187.3 |
| 38.355 | 79.3 | 21.7 | 222.3 |
| 40.861 | 63.4 | 18.8 | 270.1 |
| 42.13 | 4.0 | 18.0 | 300.0 |

The wind turbine blade comprises six novel blade profiles 41-46, which are located at different longitudinal positions along the blade and as shown in Fig. 2. Table 3 lists the relative thickness *t*/*c,* the position of maximum thickness *dₜ*/*c,* the position of the maximum pressure side camber *dₚ*/*c* and the approximate radial position r of the profiles:

**Table 3**

| **Airfoil** | **Ref. Numeral** | ***t*/*c*** | ***dₜ*/*c*** | ***dₚ*/*c*** | ***r*** |
|---|---|---|---|---|---|
| First | 41 | 36% | 27.1% | 26.6% | 11.0m |
| Second | 42 | 30% | 29.6% | 29.7% | 14.5m |
| Third | 43 | 27% | 29.8% | 27.2% | 17.0m |
| Fourth | 44 | 24% | 37.1% | 36.8% | 26.0m - 34.0m |
| Fifth | 45 | 21% | 37.0% | 33.0% | 39.0m |
| Sixth | 46 | 18% | 39.2% | 39.4% | 41.8m-42.13m |

The airfoil profiles have surprisingly been found to provide higher lift-to-drag ratios than conventional wind turbine airfoils and in particular compared to NACA-profiles. The six profiles are aerodynamically compatible, and the regions between adjacent airfoil profiles comprise a smooth transition between said adjacent profiles via interpolation between said adjacent profiles, e.g. via Gaussian distribution curves. The transitions also account for the varying twist in the longitudinal direction of the blade and the transition is thus seen to be three-dimensional.

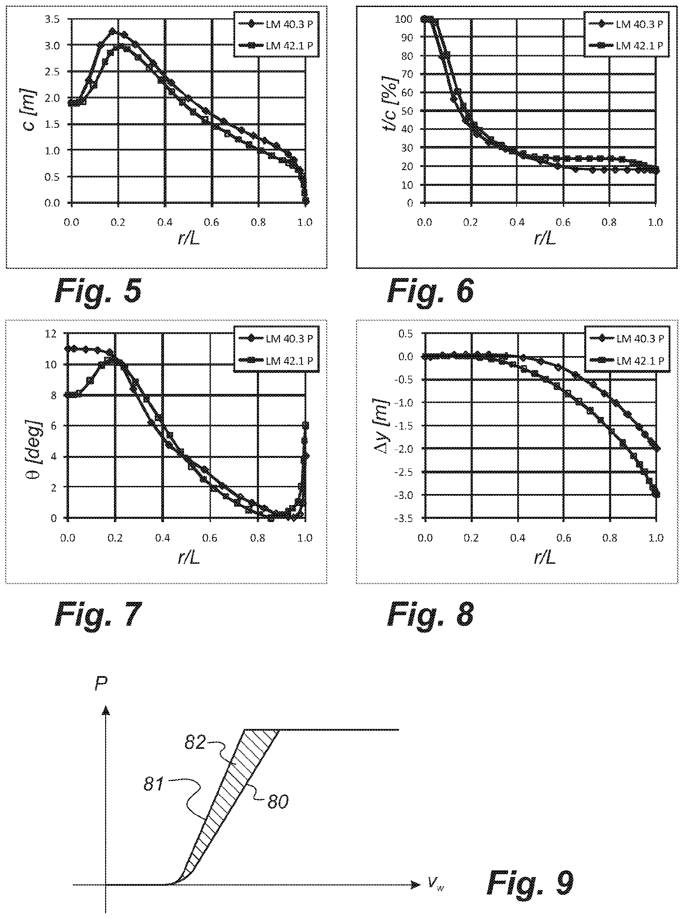

Figs. 5-8 depict graphs of the chordal distribution c, the relative thickness *t*/*c,* the twist θ, and the prebend *Δy* of the wind turbine blade according to the example (denoted LM42.1p) as a function of the relative radial position *r*/*L*. The graphs are compared to that of the prior art blade LM40.3p, which has a blade length of 40.0m and thus is comparable to the present blade.

From Fig. 5, it can be seen that the shoulder width of the present blade is approximately 8% smaller than that of the prior art blade. Further, it should be noted that the x-axis depict the relative radial position of the blade. Thus, the relative shoulder width of the present blade has been reduced even further than the 8%.

Fig. 6 depicts a graph of the relative blade thickness as a function of the relative radial blade position. It is seen that the relative thickness of the present blade is much higher than the relative thickness of the prior art blade, in particular in the range from 0.5L to 0.9L. In the range from 0.6L to 0.8L the relative thickness is approximately 33% larger than the prior art blade.

Fig. 7 shows the twist distribution of the present blade compared to the prior art blade. It can be seen that the twist is increasing in the root region and the transition region as opposed to the prior art blade, where the twist is substantially constant or slightly decreasing in this region. The twist is decreasing in an inboard part of the airfoil region and is increasing in an outboard part of the airfoil region. The inboard part and the outboard part are separated by a position of a twist inflection tangent. The twist at the inflection tangent is defined as 0 degrees twist. The inflection tangent is located at *r* = 0.855L, which is much further inboard than the prior art blade, where the inflection tangent is located at *r* = 0.943L. The maximum twist of the present blade is 10.28 degrees, which is smaller than the maximum twist of 11 degrees of the prior art blade.

Fig. 8 depicts the prebend of the blade, and it can be seen that the total absolute prebend of the present blade is 50% larger than that of the prior art blade.

All these differences, and in particular a narrower shoulder, a relatively thicker blade and a larger prebend combined make it possible to obtain a lighter blade, which mechanically is just as strong, but performs more efficient aerodynamically. In fact, the present blade has a lower mass than the prior art blade despite being longer. The loadings that the two blades would impose on a wind turbine are comparable, which means that the present blade readily may replace the prior art blade without having to redimension the wind turbine itself.

Fig. 9 schematically illustrates a first power curve 80 showing the power output of a wind turbine provided with prior art blades and a second power curve 81 showing the power output of a wind turbine provided with blades according to the present invention, both graphs illustrated as a function of wind speed *V_{w}.* It is seen that the power output increases more quickly as a function of the wind speed until the level of power regulation of the wind turbine. The increase in annual energy production (AEP) relates to the difference between the two curves and thus the hatched area 82 of the graph. The increase in AEP is projected to be 4%.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 41: first airfoil profile
- 42: second airfoil profile
- 43: third airfoil profile
- 44: fourth airfoil profile
- 45: fifth airfoil profile
- 46: sixth airfoil profile
- 50: airfoil profile
- 52: pressure side
- 54: suction side
- 56: leading edge
- 58: trailing edge
- 60: chord
- 62: camber line / median line
- 80: power curve of wind turbine with prior art blades
- 81: power curve of wind turbine with novel blades
- 82: increase in power output
- *c*: chord length
- *dₜ*: position of maximum thickness
- *d_{f}*: position of maximum camber
- *dₚ*: position of maximu pressure side camber
- *f*: camber
- *L*: blade length
- *P*: power output
- *r*: local radius, radial distance from blade root
- *t*: thickness
- *v_{w}*: wind speed
- θ: twist, pitch
- Δ*y*: prebend

## Claims

1. A blade (10) for a rotor of a wind turbine (2) having a substantially horizontal rotor shaft, said rotor comprising a hub (8), from which the blade (10) extends substantially in a radial direction when mounted to the hub (8), the blade having a longitudinal direction (r) with a tip end (16) and a root end (14) and a transverse direction, the blade further comprising:
- a profiled contour including a pressure side and a suction side, as well as a leading edge (18) and a trailing edge (20) with a chord having a chord length (c) extending there between, the profiled contour, when being impacted by an incident airflow, generating a lift, wherein the profiled contour is divided into:
- a root region (30) having a substantially circular or elliptical profile closest to the hub,
- an airfoil region (34) having a lift-generating profile furthest away from the hub, and
- a transition region (32) between the root region (30) and the airfoil region (34), the transition region (32) having a profile gradually changing in the radial direction from the circular or elliptical profile of the root region to the lift-generating profile of the airfoil region, and with
- a shoulder (40) having a shoulder width (W) and located at the boundary between the transition region (32) and the airfoil region (34), wherein
- the blade (10) has a blade length (L), wherein the blade length (L) is at least 40 meters, and
- the profiled contour comprises a local relative thickness defined as the local ratio between a maximum profile thickness (t) and the chord length (c),
- the ratio between the shoulder width (W) and the blade length (L) being less than or equal to 0.075, **characterised in that**
- the relative thickness (t/c) in a blade length interval of 0-0.8L is at least 22%,
- wherein the blade comprises a second airfoil profile having a relative thickness of between 29% and 31% and a position of maximum thickness located between 0.28c and 0.32c from the leading edge, wherein the second airfoil profile comprises a position of maximum pressure side camber located between 0.28c and 0.32c from the leading edge, and the second airfoil profile is located between 0.30L and 0.36L,
- wherein the blade comprises a third airfoil profile having a relative thickness of between 26.3% and 27.7% and a position of maximum thickness located between 0.28c and 0.32c from the leading edge, wherein the third airfoil profile comprises a position of maximum pressure side camber located between 0.255c and 0.295c from the leading edge and the third airfoil profile is located between 0.36L and 0.45L, and
- wherein the blade comprises a fourth airfoil profile having a relative thickness of between 23.5% and 24.5% and a position of maximum thickness located between 0.35c and 0.39c from the leading edge, wherein the fourth airfoil profile comprises a position of maximum pressure side camber located between 0.35c and 0.39c from the leading edge and the fourth airfoil profile is located between 0.5L and 0.85L.

2. A wind turbine blade according to any of the preceding claims, wherein the root region has a root diameter (D) at the root end of the blade, wherein the ratio between the shoulder width (W) and the root diameter is 1.6 or less.

3. A wind turbine blade according to any of the preceding claims, wherein the trailing edge has a smooth shape without any discontinuities in the longitudinal direction of the blade, e.g. wherein the trailing edge has a curvature with an outer radius (*rₒ*) external to the trailing edge, which at all positions is at least 0.2L, advantageously at least 0.22L, and more advantageously at least 0.24L, and/or wherein the trailing edge has a curvature with an inner radius (*rᵢ*) internal to the trailing edge, which at all positions is at least 0.2L, advantageously at least 0.225L, and more advantageously at least 0.25L.

4. A wind turbine blade according to any of the preceding claims, wherein the shoulder is located in an interval between 0.18L and 0.25L, advantageously between 0.19L and 0.24L, and/or the relative thickness of the blade at the shoulder is between 40% and 50%, advantageously between 42% and 48%.

5. A wind turbine blade according to any of the preceding claims, wherein the wind turbine blade is prebent towards the pressure side of the blade, and a prebend (Δy) at the tip end of the blade is at least 0.05L, advantageously at least 0.06L, more advantageously at least 0.65L, and even more advantageously at least 0.07L, e.g. wherein the blade is prebent over at least an outer 50% of the blade, advantageously over at least an outer 60% of the blade, even more advantageously over at least an outer 70%, or even at least an outer 75%.

6. A wind turbine blade according to any of the preceding claims, wherein the blade is provided with a twist, and wherein the airfoil region comprises an inboard part in which a twist angle is decreasing towards the tip end of the blade and an outboard part in which the twist angle is increasing towards the tip end of the blade, said outboard part and inboard part being separated by a position of a twist inflection tangent, e.g. wherein the position of the twist inflection tangent is located between 0.8L and 0.9L, advantageously between 0.82L and 0.88L, more advantageously between 0.83L and 0.87L, and even more advantageously approximately at 0.85L.

7. A wind turbine blade according to claim 6, wherein the twist in the outboard region varies at least 4 degrees, advantageously at least 5 degrees, and more advantageously at least 5.5 degrees, and/or the twist in the inboard part varies between 8 and 12 degrees, advantageously between 8.5 and 11.5 degrees, and more advantageously between 9 and 11 degrees.

8. A wind turbine blade according to any of the preceding claims, wherein the blade comprises a first airfoil profile having a relative thickness of between 35% and 37% and a position of maximum thickness located between 0.24c and 0.30c from the leading edge, advantageously located between 0.25c and 0.29c and more advantageously around 0.26c and 0.28c, e.g. wherein the first airfoil profile comprises a position of maximum pressure side camber located between 0.24c and 0.30c from the leading edge, advantageously located between 0.25c and 0.29c and more advantageously around 0.26c and 0.28c, and/or the first airfoil profile is located between 0.23L and 0.30L.

9. A wind turbine blade according to any of the preceding claims, wherein the second airfoil profile has a position of maximum thickness located between 0.29c and 0.31c from the leading edge, and wherein the second airfoil profile comprises a position of maximum pressure side camber located between 0.29c and 0.31c from the leading edge.

10. A wind turbine blade according to any of the preceding claims, wherein the third airfoil profile has a position of maximum thickness located between 0.29c and 0.31c from the leading edge and wherein the third airfoil profile comprises a position of maximum pressure side camber located between 0.265c and 0.285c from the leading edge.

11. A wind turbine blade according to any of the preceding claims, wherein the fourth airfoil profile has a position of maximum thickness located between 0.36c and 0.38c from the leading edge, and wherein the fourth airfoil profile comprises a position of maximum pressure side camber located between 0.36c and 0.38c from the leading edge.

12. A wind turbine blade according to any of the preceding claims, wherein the blade comprises a fifth airfoil profile having a relative thickness of between 20.6% and 21.4% and a position of maximum thickness located between 0.35c and 0.39c from the leading edge, advantageously between 0.36c and 0.38c, e.g. wherein the fifth airfoil profile comprises a position of maximum pressure side camber located between 0.31c and 0.35c from the leading edge, advantageously between 0.32c and 0.34c, and/or the fifth airfoil profile is located between 0.85L and 0.95L.

13. A wind turbine blade according to any of the preceding claims, wherein the blade comprises a sixth airfoil profile having a relative thickness of between 17.7% and 18.3% and a position of maximum thickness located between 0.37c and 0.41c from the leading edge, advantageously between 0.38c and 0.40c, e.g. wherein the sixth airfoil profile comprises a position of maximum pressure side camber located between 0.37c and 0.41c from the leading edge, advantageously between 0.38c and 0.40c, and/or the sixth airfoil profile is located at the tip, between 0.95L and L.

14. A wind turbine blade according to any of the preceding claims, wherein the blade is provided with flow altering devices, such as vortex generators, wherein said devices are arranged at profile sections having a relative thickness of at least 30%, and/or said devices are arranged at profile sections having a relative thickness of maximum 70%.

15. A wind turbine comprising a number, preferably two or three, of blades according to any of the preceding claims, the blades extending substantially radially from a hub on a main shaft having a substantially horizontal centre axis, the blades together with the hub constituting a rotor with a rotor plane, and which can be put into rotation by wind, wherein the wind turbine may optionally be pitch controlled and/or power regulated, e.g. with a maximum power output of the wind turbine being between 1.3MW and 1.7MW, advantageously around 1.5MW.

## Patentansprüche

1. Flügel (10) für einen Rotor einer Windkraftanlage (2) mit einer im Wesentlichen horizontalen Rotorwelle, wobei der Rotor eine Nabe (8) umfasst, von der sich der Flügel (10) im Wesentlichen in einer radialen Richtung erstreckt, wenn er an der Nabe (8) angebracht ist, wobei der Flügel eine Längsrichtung (r) mit einem Spitzenende (16) und einem Wurzelende und eine Querrichtung aufweist, wobei der Flügel ferner Folgendes umfasst:
- eine Profilkontur, umfassend eine Druckseite und eine Saugseite sowie eine Eintrittskante (18) und eine Austrittskante (20) mit einer eine Sehnenlänge (c) aufweisenden, sich dazwischen erstreckenden Sehne, wobei die Profilkontur, wenn ein einfallender Luftstrom darauf auftrifft, einen Auftrieb erzeugt, wobei die Profilkontur in Folgendes unterteilt ist:
- eine Wurzelregion (30), der Nabe am nächsten liegend, mit einem im Wesentlichen kreisförmigen oder elliptischen Profil,
- eine Tragflächenregion (34), am weitesten von der Nabe entfernt, mit einem Auftrieb erzeugenden Profil, und
- eine Übergangsregion (32) zwischen der Wurzelregion (30) und der Tragflächenregion (34), wobei die Übergangsregion (32) ein Profil aufweist, das sich in der Radialrichtung allmählich von dem kreisförmigen oder elliptischen Profil der Wurzelregion zu dem Auftrieb erzeugenden Profil der Tragflächenregion ändert, und mit
- einem Absatz (40), der eine Absatzbreite (W) aufweist und sich an der Grenze zwischen der Übergangsregion (32) und der Tragflächenregion (34) befindet, wobei
- der Flügel (10) eine Flügellänge (L) aufweist, wobei die Flügellänge (L) mindestens 40 Meter beträgt, und
- die Profilkontur eine örtliche relative Dicke umfasst, die als das örtliche Verhältnis zwischen einer maximalen Profildicke (t) und der Sehnenlänge (c) definiert ist,
- das Verhältnis zwischen der Absatzbreite (W) und der Flügellänge (L) kleiner als oder gleich 0,075 ist, **dadurch gekennzeichnet, dass**
- die relative Dicke (t/c) in einem Flügellängenintervall von 0-0,8 L mindestens 22 % beträgt,
- wobei der Flügel ein zweites Tragflächenprofil mit einer relativen Dicke von zwischen 29 % und 31 % und einer Stelle maximaler Dicke, die zwischen 0,28 c und 0,32 c von der Eintrittskante liegt, umfasst, wobei das zweite Tragflächenprofil eine Stelle maximaler druckseitiger Wölbung umfasst, die zwischen 0,28 c und 0,32 c von der Eintrittskante liegt und das zweite Tragflächenprofil zwischen 0,30 L und 0,36 L liegt,
- wobei der Flügel ein drittes Tragflächenprofil mit einer relativen Dicke von zwischen 26,3 % und 27,7 % und einer Stelle maximaler Dicke, die zwischen 0,28 c und 0,32 c von der Eintrittskante liegt, umfasst, wobei das dritte Tragflächenprofil eine Stelle maximaler druckseitiger Wölbung umfasst, die zwischen 0,255 c und 0,295 c von der Eintrittskante liegt und das dritte Tragflächenprofil zwischen 0,36 L und 0,45 L liegt, und
- wobei der Flügel ein viertes Tragflächenprofil mit einer relativen Dicke von zwischen 23,5 % und 24,5 % und einer Stelle maximaler Dicke, die zwischen 0,35 c und 0,39 c von der Eintrittskante liegt, umfasst, wobei das vierte Tragflächenprofil eine Stelle maximaler druckseitiger Wölbung umfasst, die zwischen 0,35 c und 0,39 c von der Eintrittskante liegt und das vierte Tragflächenprofil zwischen 0,5 L und 0,85 L liegt,

2. Windkraftanlagenflügel nach dem vorangehenden Anspruch, wobei die Wurzelregion einen Wurzeldurchmesser (D) am Wurzelende des Flügels aufweist, wobei das Verhältnis zwischen der Absatzbreite (W) und dem Wurzeldurchmesser 1,6 oder weniger beträgt.

3. Windkraftanlagenflügel nach einem der vorangehenden Ansprüche, wobei die Austrittskante eine glatte Form ohne jegliche Diskontinuitäten in der Längsrichtung des Flügels aufweist, z. B. wobei die Austrittskante eine Krümmung mit einem äußeren Radius (*rₒ*) außen an der Austrittskante aufweist, der an allen Stellen mindestens 0,2 L beträgt, vorteilhafterweise mindestens 0,22 L und noch vorteilhafter mindestens 0,24 L, und/oder wobei die Austrittskante eine Krümmung mit einem inneren Radius (*rᵢ*) innen an der Austrittskante aufweist, der an allen Stellen mindestens 0,2 L beträgt, vorteilhafterweise mindestens 0,225 L und noch vorteilhafter mindestens 0,25 L.

4. Windkraftanlagenflügel nach einem der vorangehenden Ansprüche, wobei der Absatz in einem Intervall zwischen 0,18 L und 0,25 L liegt, vorteilhafterweise zwischen 0,19 L und 0,24 L und/oder die relative Dicke des Flügels an dem Absatz zwischen 40 % und 50 % beträgt, vorteilhafterweise zwischen 42 % und 48 %.

5. Windkraftanlagenflügel nach einem der vorangehenden Ansprüche, wobei der Windkraftanlagenflügel zur Druckseite des Flügels hin vorgebogen ist, und eine Vorabbiegung (Δy) am Spitzenende des Flügels mindestens 0,05 L beträgt, vorzugsweise mindestens 0,06 L, noch vorteilhafter mindestens 0,65 L und noch besser mindestens 0,07 L, z. B. wobei der Flügel über mindestens äußere 50 % des Flügels vorgebogen ist, vorteilhafterweise über mindestens äußere 60 % des Flügels, noch vorteilhafter über mindestens äußere 70 % oder sogar mindestens äußere 75 %.

6. Windkraftanlagenflügel nach einem der vorangehenden Ansprüche, wobei der Flügel mit einer Verdrehung versehen ist, und wobei die Tragflächenregion einen innenliegenden Teil, in dem ein Verdrehungswinkel zum Spitzenende des Flügels hin abnimmt, und einen außenliegenden Teil, in dem der Verdrehungswinkel zum Spitzenende des Flügels hin zunimmt, umfasst, wobei der außenliegende Teil und der innenliegende Teil durch eine Lage einer Verdrehungsbeugungstangente getrennt sind, z. B. wobei die Lage der Verdrehungsbeugungstangente zwischen 0,8 L und 0,9 L liegt, vorteilhafterweise zwischen 0,82 L und 0,88 L, noch vorteilhafter zwischen 0,83 L und 0,87 L und noch besser ungefähr bei 0,85 L.

7. Windkraftanlagenflügel nach Anspruch 6, wobei die Verdrehung in der außenliegenden Region um mindestens 4 Grad variiert, vorteilhafterweise um mindestens 5 Grad und noch vorteilhafter um mindestens 5,5 Grad und/oder die Verdrehung im innenliegenden Teil zwischen 8 und 12 Grad variiert, vorteilhafterweise zwischen 8,5 und 11,5 Grad und noch vorteilhafter zwischen 9 und 11 Grad.

8. Windkraftanlagenflügel nach einem der vorangehenden Ansprüche, wobei der Flügel ein erstes Tragflächenprofil umfasst, mit einer relativen Dicke von zwischen 35 % und 37 % und einer Stelle maximaler Dicke, die zwischen 0,24 c und 0,30 c von der Eintrittskante liegt, vorteilhafterweise zwischen 0,25 c und 0,29 c liegt und noch vorteilhafter um 0,26 c und 0,28 c, z. B. wobei das erste Tragflächenprofil eine Stelle maximaler druckseitiger Wölbung umfasst, die zwischen 0,24 c und 0,30 c von der Eintrittskante liegt, vorteilhafterweise zwischen 0,25 c und 0,29 c liegt und noch vorteilhafter um 0,26 c und 0,28 c liegt und/oder das erste Tragflächenprofil zwischen 0,23 L und 0,30 L liegt.

9. Windkraftanlagenflügel nach einem der vorangehenden Ansprüche, wobei das zweite Tragflächenprofil eine Stelle maximaler Dicke aufweist, die zwischen 0,29 c und 0,31 c von der Eintrittskante liegt, und wobei das zweite Tragflächenprofil eine Stelle maximaler druckseitiger Wölbung umfasst, die zwischen 0,29 c und 0,31 c von der Eintrittskante liegt.

10. Windkraftanlagenflügel nach einem der vorangehenden Ansprüche, wobei das dritte Tragflächenprofil eine Stelle maximaler Dicke aufweist, die zwischen 0,29 c und 0,31 c von der Eintrittskante liegt, und wobei das dritte Tragflächenprofil eine Stelle maximaler druckseitiger Wölbung umfasst, die zwischen 0,265 c und 0,285 c von der Eintrittskante liegt.

11. Windkraftanlagenflügel nach einem der vorangehenden Ansprüche, wobei das vierte Tragflächenprofil eine Stelle maximaler Dicke aufweist, die zwischen 0,36 c und 0,38 c von der Eintrittskante liegt, und wobei das vierte Tragflächenprofil eine Stelle maximaler druckseitiger Wölbung umfasst, die zwischen 0,36 c und 0,38 c von der Eintrittskante liegt.

12. Windkraftanlagenflügel nach einem der vorangehenden Ansprüche, wobei der Flügel ein fünftes Tragflächenprofil umfasst, mit einer relativen Dicke von zwischen 20,6 % und 21,4 % und einer Stelle maximaler Dicke, die zwischen 0,35 c und 0,39 c von der Eintrittskante liegt, vorteilhafterweise zwischen 0,36 c und 0,38 c, z. B. wobei das fünfte Tragflächenprofil eine Stelle maximaler druckseitiger Wölbung umfasst, die zwischen 0,31 c und 0,35 c von der Eintrittskante liegt, vorteilhafterweise zwischen 0,32 c und 0,34 c und/oder das fünfte Tragflächenprofil zwischen 0,85 L und 0,95 L liegt.

13. Windkraftanlagenflügel nach einem der vorangehenden Ansprüche, wobei der Flügel ein sechstes Tragflächenprofil umfasst, mit einer relativen Dicke von zwischen 17,7 % und 18,3 % und einer Stelle maximaler Dicke, die zwischen 0,37 c und 0,41 c von der Eintrittskante liegt, vorteilhafterweise zwischen 0,38 c und 0,40 c, z. B. wobei das sechste Tragflächenprofil eine Stelle maximaler druckseitiger Wölbung umfasst, die zwischen 0,37 c und 0,41 c von der Eintrittskante liegt, vorteilhafterweise zwischen 0,38 c und 0,40 c und/oder das sechste Tragflächenprofil an der Spitze, zwischen 0,95 L und L liegt.

14. Windkraftanlagenflügel nach einem der vorangehenden Ansprüche, wobei der Flügel mit Strömungsänderungsvorrichtungen versehen ist, wie etwa Wirbelgeneratoren, wobei die Vorrichtungen an Profilabschnitten angeordnet sind, die eine relative Dicke von mindestens 30 % aufweisen und/oder die Vorrichtungen an Profilabschnitten angeordnet sind, die eine relative Dicke von maximal 70 % aufweisen.

15. Windkraftanlage, umfassend eine Anzahl, vorzugsweise zwei oder drei, Flügel nach einem der vorangehenden Ansprüche, wobei sich die Flügel im Wesentlichen radial von einer Nabe auf einer Hauptwelle mit einer im Wesentlichen horizontalen Mittenachse erstrecken, wobei die Flügel zusammen mit der Nabe einen Rotor mit einer Rotorebene bilden, und die durch Wind in Drehung versetzt werden können, wobei die Windkraftanlage optional über Flügelwinkelverstellung und/oder Leistungsregelung verfügen kann, z. B. wobei eine maximale Ausgangsleistung der Windkraftanlage zwischen 1,3 MW und 1,7 MW beträgt, vorteilhafterweise etwa 1,5 MW.

## Revendications

1. Pale (10) pour un rotor d'une éolienne (2) ayant un arbre de rotor sensiblement horizontal, ledit rotor comportant un moyeu (8), en provenance duquel la pale (10) s'étend sensiblement dans une direction radiale, quand elle est montée sur le moyeu (8), la pale ayant une direction longitudinale (r) avec une extrémité de bout (16) et une extrémité de pied (14) et une direction transversale, la pale comportant par ailleurs :
- un contour profilé comprenant un côté en pression et un côté en dépression, ainsi qu'un bord d'attaque (18) et un bord de fuite (20) avec une corde ayant une longueur de corde (c) s'étendant entre eux, le contour profilé, quand il subit un impact par un écoulement d'air incident, générant une portance, dans laquelle le contour profilé est divisé en :
- une région de pied (30) ayant un profil sensiblement circulaire ou elliptique se trouvant au plus près du moyeu,
- une région à profil aérodynamique (34) ayant un profil générant de la portance se trouvant au plus loin du moyeu, et
- une région de transition (32) entre la région de pied (30) et la région à profil aérodynamique (34), la région de transition (32) ayant un profil changeant graduellement dans la direction radiale allant du profil circulaire ou elliptique de la région de pied au profil générant de la portance de la région à profil aérodynamique, et avec
- un épaulement (40) ayant une largeur d'épaulement (W) et situé au niveau de la limite entre la région de transition (32) et la région à profil aérodynamique (34), dans laquelle
- la pale (10) a une longueur de pale (L), dans laquelle la longueur de pale (L) mesure au moins 40 mètres, et
- le contour profilé comporte une épaisseur relative locale définie comme étant le rapport local entre une épaisseur de profil maximum (t) et la longueur de corde (c),
- le rapport entre la largeur d'épaulement (W) et la longueur de pale (L) étant inférieur ou égal à 0,075, **caractérisée en ce que**
- l'épaisseur relative (t/c) dans un intervalle de longueur de pale de 0 à 0,8L est au moins de 22 %,
- dans laquelle la pale comporte un deuxième profil aérodynamique ayant une épaisseur relative entre 29 % et 31 % et une position d'épaisseur maximum située entre 0,28c et 0,32c depuis le bord d'attaque, dans laquelle le deuxième profil aérodynamique comporte une position de cambrure maximum côté en pression située entre 0,28c et 0,32c depuis le bord d'attaque, et le deuxième profil aérodynamique est situé entre 0,30L et 0,36L,
- dans laquelle la pale comporte un troisième profil aérodynamique ayant une épaisseur relative entre 26,3 % et 27,7 % et une position d'épaisseur maximum située entre 0,28c et 0,32c depuis le bord d'attaque, dans laquelle le troisième profil aérodynamique comporte une position de cambrure maximum côté en pression située entre 0,255c et 0,295c depuis le bord d'attaque et le troisième profil aérodynamique est situé entre 0,36L et 0,45L, et
- dans laquelle la pale comporte un quatrième profil aérodynamique ayant une épaisseur relative entre 23,5 % et 24,5 % et une position d'épaisseur maximum située entre 0,35c et 0,39c depuis le bord d'attaque, dans laquelle le quatrième profil aérodynamique comporte une position de cambrure maximum côté en pression entre 0,35c et 0,39c depuis le bord d'attaque et le quatrième profil aérodynamique est situé entre 0,5L et 0,85L.

2. Pale d'éolienne selon la revendication précédente, dans laquelle la région de pied a un diamètre de pied (D) au niveau de l'extrémité de pied de la pale, dans laquelle le rapport entre la largeur d'épaulement (W) et le diamètre de pied est de 1,6 ou moins.

3. Pale d'éolienne selon l'une quelconque des revendications précédentes, dans laquelle le bord de fuite a une forme lisse sans aucune discontinuité dans la direction longitudinale de la pale, par exemple dans laquelle le bord de fuite a une courbure avec un rayon extérieur (rₒ) externe au bord de fuite, qui à toutes les positions mesure au moins 0,2L, de manière avantageuse au moins 0,22L, et de manière plus avantageuse au moins 0,24L, et/ou dans laquelle le bord de fuite a une courbure avec un rayon intérieur (rᵢ) interne au bord de fuite, qui à toutes les positions mesure au moins 0,2L, de manière avantageuse au moins 0,225L, et de manière plus avantageuse au moins 0,25L.

4. Pale d'éolienne selon l'une quelconque des revendications précédentes, dans laquelle l'épaulement est situé dans un intervalle entre 0,18L et 0,25L, de manière avantageuse entre 0,19L et 0,24L, et/ou l'épaisseur relative de la pale au niveau de l'épaulement est entre 40 % et 50 %, de manière avantageuse entre 42 % et 48 %.

5. Pale d'éolienne selon l'une quelconque des revendications précédentes, dans laquelle la pale d'éolienne est incurvée vers le côté en pression de la pale, et une incurvation (Δy) au niveau de l'extrémité de bout de la pale mesure au moins 0,05L, de manière avantageuse au moins 0,06L, de manière plus avantageuse au moins 0,65 L, et de manière encore plus avantageuse au moins 0,07L, par exemple dans laquelle la pale est incurvée sur au moins 50 % d'extérieur de la pale, de manière avantageuse sur au moins 60 % d'extérieur de la pale, de manière encore plus avantageuse sur au moins 70 % d'extérieur, ou même au moins 75 % d'extérieur.

6. Pale d'éolienne selon l'une quelconque des revendications précédentes, dans laquelle la pale comporte une torsion, et dans laquelle la région à profil aérodynamique comporte une partie intérieure dans laquelle un angle de torsion va en diminuant vers l'extrémité de bout de la pale et une partie extérieure dans laquelle l'angle de torsion va en augmentant vers l'extrémité de bout de la pale, ladite partie extérieure et ladite partie intérieure étant séparées par une position d'une tangente d'inflexion de torsion, par exemple dans laquelle la position de la tangente d'inflexion de torsion est située entre 0,8L et 0,9L, de manière avantageuse entre 0,82L et 0,88L, de manière plus avantageuse entre 0,83L et 0,87L, de manière encore plus avantageuse approximativement à 0,85L.

7. Pale d'éolienne selon la revendication 6, dans laquelle la torsion dans la région extérieure varie d'au moins 4 degrés, de manière avantageuse d'au moins 5 degrés, et de manière plus avantageuse d'au moins 5,5 degrés, et/ou la torsion dans la partie intérieure varie entre 8 et 12 degrés, de manière avantageuse entre 8,5 et 11,5 degrés, et de manière plus avantageuse entre 9 et 11 degrés.

8. Pale d'éolienne selon l'une quelconque des revendications précédentes, dans laquelle la pale comporte un premier profil aérodynamique ayant une épaisseur relative entre 35 % et 37 % et une position d'épaisseur maximum située entre 0,24c et 0,30c depuis le bord d'attaque, située de manière avantageuse entre 0,25c et 0,29c et de manière plus avantageuse entre environ 0,26c et 0,28c, par exemple dans laquelle le premier profil aérodynamique comporte une position de cambrure maximum côté en pression située entre 0,24c et 0,30c depuis le bord d'attaque, de manière avantageuse située entre 0,25c et 0,29c et de manière plus avantageuse entre environ 0,26c et 0,28c, et/ou et le premier profil aérodynamique est situé entre 0,23L et 0,30L.

9. Pale d'éolienne selon l'une quelconque des revendications précédentes, dans laquelle le deuxième profil aérodynamique a une position d'épaisseur maximum située entre 0,29c et 0,31c depuis le bord d'attaque, et dans laquelle le deuxième profil aérodynamique comporte une position de cambrure maximum côté en pression située entre 0,29c et 0,31c depuis le bord d'attaque.

10. Pale d'éolienne selon l'une quelconque des revendications précédentes, dans laquelle le troisième profil aérodynamique a une position d'épaisseur maximum située entre 0,29c et 0,31c depuis le bord d'attaque et dans laquelle le troisième profil aérodynamique comporte une position de cambrure maximum côté en pression située entre 0,265c et 0,285c depuis le bord d'attaque.

11. Pale d'éolienne selon l'une quelconque des revendications précédentes, dans laquelle le quatrième profil aérodynamique a une position d'épaisseur maximum située entre 0,36c et 0,38c depuis le bord d'attaque, et dans laquelle le quatrième profil aérodynamique comporte une position de cambrure maximum côté en pression située entre 0,36c et 0,38c depuis le bord d'attaque.

12. Pale d'éolienne selon l'une quelconque des revendications précédentes, dans laquelle la pale comporte un cinquième profil aérodynamique ayant une épaisseur relative entre 20,6 % et 21,4 % et une position d'épaisseur maximum située entre 0,35c et 0,39c depuis le bord d'attaque, de manière avantageuse entre 0,36c et 0,38c, par exemple dans laquelle le cinquième profil aérodynamique comporte une position de cambrure maximum côté en pression située entre 0,31c et 0,35c depuis le bord d'attaque, de manière avantageuse entre 0,32c et 0,34c, et/ou et le cinquième profil aérodynamique est situé entre 0,85L et 0,95L.

13. Pale d'éolienne selon l'une quelconque des revendications précédentes, dans laquelle la pale comporte un sixième profil aérodynamique ayant une épaisseur relative entre 17,7 % et 18,3 % et une position d'épaisseur maximum située entre 0,37c et 0,41c depuis le bord d'attaque, de manière avantageuse entre 0,38c et 0,40c, par exemple dans laquelle le sixième profil aérodynamique comporte une position de cambrure maximum côté en pression située entre 0,37c et 0,41c depuis le bord d'attaque, de manière avantageuse entre 0,38c et 0,40c, et/ou et le sixième profil aérodynamique est situé au niveau du bout, entre 0,95L et L.

14. Pale d'éolienne selon l'une quelconque des revendications précédentes, dans laquelle la pale comporte des dispositifs de modification d'écoulement, tels que des générateurs de tourbillons, dans laquelle lesdits dispositifs sont agencés au niveau de sections profilées ayant une épaisseur relative d'au moins 30 %, et/ou lesdits dispositifs sont agencés au niveau de sections profilées ayant une épaisseur relative de 70 % maximum.

15. Éolienne comportant un certain nombre de pales, de préférence deux ou trois, selon l'une quelconque des revendications précédentes, les pales s'étendant sensiblement de manière radiale depuis un moyeu sur un arbre principal ayant un axe central sensiblement horizontal, les pales ainsi que le moyeu constituant un rotor avec un plan de rotor, et qui peuvent être mises en rotation par le vent, dans laquelle l'éolienne peut éventuellement être commandée en fonction du pas et/ou régulée en fonction de la puissance, par exemple une sortie de puissance maximum de l'éolienne étant entre 1,3 MW et 1,7 MW, de manière avantageuse autour de 1,5 MW.
